# EUROPEAN PATENT SPECIFICATION

(11) **EP 1 709 348 B1**
(45) Date of publication and mention of the grant of the patent: **20.01.2010**
(21) Application number: 05700590.2
(22) Date of filing: 21.01.2005
(51) Int. Cl.: F16H 13/04

(54) **A PLANETARY GEAR**
PLANETENGETRIEBE
ENGRENAGE PLANETAIRE

(30) Priority: 22.01.2004 DK 200400081
(43) Date of publication of application: 11.10.2006
(73) Proprietor: Rotrex A/S, 2730 Herlev (DK)
(72) Inventor: KOLSTRUP, Anders, Peter, DK-2500 Valby (DK)
(74) Representative: Larsen, Hans Ole
(86) International application number: PCT/DK2005/000040
(87) International publication number: WO 2005/071289

(56) References cited:
- WO-A1-02/064997

## Description

### State of the art

The invention relates to a planetary gear incorporated in a gear housing with an outer ring and with planet wheels and a sun shaft in particular for use at a high number of revolutions and high gear ratios, where the gear comprises two essentially diametrically positioned planet wheels (2) which partly roll against the outer ring (4) and partly against a sun shaft (1), said planet wheels (2) being provided with a shaft (3) which is mounted (5) on the stationary front plate (14) and on the support plate (12), respectively.

Planetary gears for high speeds and gear ratios are known from WO 02/064997. This gear is provided with at least three planet wheels, and therefore the gear ratio cannot exceed 13.6 : 1 because of physical conditions, which cause the planet wheels to make contact with each other at greater gear ratios.

### Object of the invention

Since the need for greater gear ratios is increasing because of the demand for high speed compressors and the like, the object of the invention is to meet the requirements of high speed as well as gear ratio, and an optimum transfer of moment even at high speeds.

This is achieved according to the invention by a gear where the sun shaft is mounted in high speed bearings, of which the outermost bearing is mounted in a resilient bushing in the front plate and the innermost bearing in a resilient bushing in the support plate.

Both a high speed and a greater gear ratio are ensured in this simple manner owing to the structure with just two planet wheels.

To this should be added that a great transfer of moment is achieved between the parts because of the pressure between the frictional faces, which will vary In a controlled manner with the output moment, since the planet wheels will be pressed against the sun shaft, as the bias required for the transfer of moment may be provided.

When, as stated in claim 2, the planet shafts are mounted with a radial clearance in the front plate and the support plate, respectively, it is ensured that the planet wheels are pressed harder against the sun shaft when the gear is in operation.

When, as stated in claim 3, the bearings of the sun shaft are replaced by a further set of planet wheels which engage the sun shaft, this will be stabilized and controlled so that the gear may operate at very high speeds.

### The drawing

Examples of embodiments of the gear according to the invention will be described more fully below with reference to the drawing, in which
- fig. 1: shows a sectional view of a gear with mounted planet wheels and sun shaft,
- fig. 2: shows a sectional view of the gear seen in the direction II-II in fig. 1,
- fig, 3: shows a sectional view of a second exemplary embodiment of the gear, where the sun wheel is supported by offset planet wheels, and
- fig. 4: shows a sectional view of this gear seen in the direction IV-IV in fig. 3.

### Description of exemplary embodiments

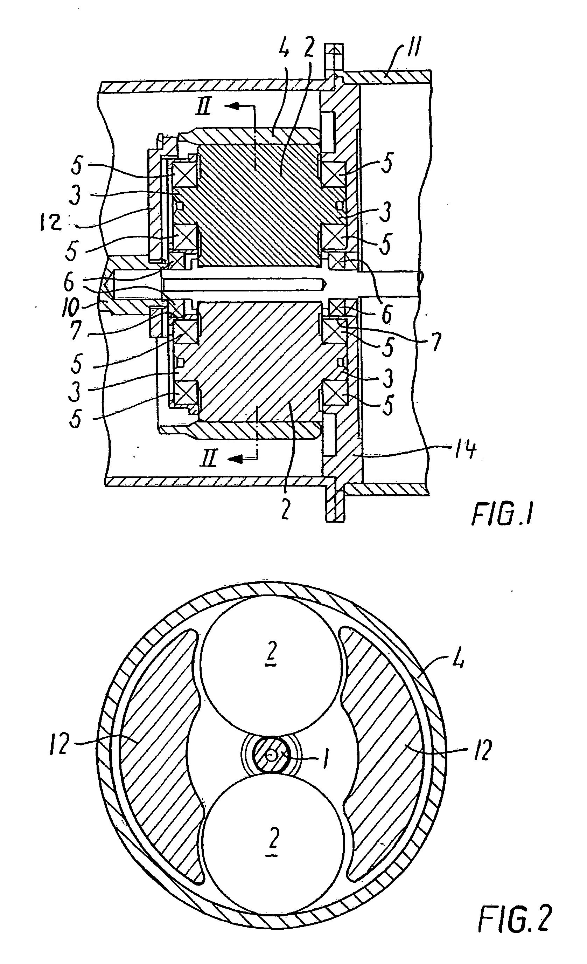

Figs. 1 and 2 show a first example of a one-stage gear. The gear comprises a sun shaft 1 which is mounted in high speed bearings of a ceramic or similar type.

The outermost bearing 6 is mounted in the front plate 14 of the gear housing 11, while the innermost bearing 6 is mounted in the support plate 12 which is secured to the front plate 14, whereby a rigid bearing housing is provided.

Both sets of bearings may be moved in a radial direction. Said bearings 6 are mounted in resilient bushings 7.

Each of the planet wheels 2 is provided with stub shafts 3 on both sides, said shafts 3 being mounted in high speed bearings 5 in bores in the front plate 14 and the support plate 12, respectively.

The structure shown is unique in that the planet shaft bearings 5 are arranged outside the planet wheels 2 in an axial direction.

Moreover, the bearings 5 are typically about 5-8/100 mm smaller than the cooperating bores.

The centre shafts of the planet wheels 2 are parallel with the centre shaft of the sun shaft 1, and they are disposed closer to the sun axis when these are present in their state of operation, where the bearings 5 of the shaft parts are in engagement with the inner surfaces of the cooperating surfaces on the bores.

The support plate 12 gives the mounted parts a sturdy position by means of strong stays, as indicated in fig. 2.

The centrally rotatable sun shaft 1 and the two planet wheels 2 arranged diametrically around the shaft rotate about their own axes and with means for resiliently pressing the peripheral outer face of the planet wheels 2 into force-transferring engagement with the peripheral outer face of the sun shaft 1.

The internal surface of the outer ring 4 is machined for the greatest possible friction, traction, with the surfaces of the planet wheels 2.

The internal diameter of the outer ring 4 is typically 0.1-0,4% smaller than the geometrical circle which surrounds the planet wheels 2, whereby the bias required for the transfer of moment is achieved.

These conditions ensure that the planet wheels 2 are pressed hard against the sun shaft 1 when the gear is in its state of operation, where both planet wheels 2 are in engagement with the sun shaft 1, and the bearings 5 are in engagement with the inner surfaces in the cooperating bores.

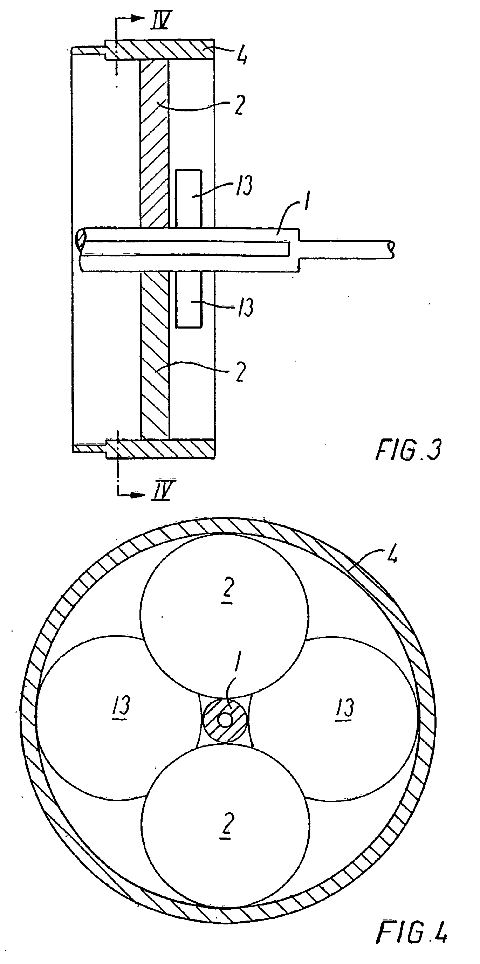

Figs. 3 and 4 show a sketch of a further embodiment, where the exemplary embodiment discussed with reference to figs. 1 and 2 is provided with two further planet wheels 13.

Hereby, the sun shaft 1 may be controlled by the planet wheels without any need for bearings, which allows operation at extremely high speeds of rotation, as the sun shaft 1 is controlled by the four planet wheels 2, 13.

The drawing does not show bearings, etc. for the planet wheels, but these may of the type which are mentioned in connection with the exemplary embodiment shown in figs. 1 and 2.

In both exemplary embodiments, the gear may be used as a speed increaser and as a speed reducer, respectively, by selection of drive shaft and output shaft, The drive shaft shown in fig. 1 provides speed increase, while selection of the sun shaft 1 as a drive shaft provides reduction,

## Claims

1. A planetary gear incorporated in a gear housing with an outer ring (4) and with planet wheels (2) and a sun shaft (1) in particular for use at a high number of revolutions and high gear ratios, where the gear comprises two essentially diametrically positioned planet wheels (2) which partly roll against the outer ring (4) and partly against the sun shaft (1), said planet wheels (2) being provided with a shaft (3) which is mounted (5) on a stationary front plate (14) and on a support plate (12), respectively, **characterized in that** the sun shaft (1) is mounted in high speed bearings (6), of which the outermost bearing (6) is mounted in a resilient bushing (7) in the front plate (14) and the innermost bearing (6) in a resilient bushing (7) in the support plate (12).

2. A planetary gear according to claim 1, **characterized in that** the bearings (5) of the planet shafts (3) have a predetermined radial clearance in their bores in the front plate (14) and the support plate (12), respectively.

3. A planetary gear according to claims 1 and 2, **characterized in that** two further planet wheels (13) are mounted, extending in parallel with the planet wheels (2), said further planet wheels (13) extending essentially diametrically opposite such that the four planet wheels (2, 13) engage the sun shaft (1) and the outer ring (4) with a mutual angular position of 90°.

## Patentansprüche

1. Planetengetriebe, das in einem Getriebegehäuse enthalten ist, mit einem Außenring (4) und mit Planetenrädern (2) sowie einer Sonnenradwelle (1), insbesondere für die Benutzung bei einer großen Zahl von Umdrehungen und hohen Übersetzungsverhältnissen, wobei das Getriebe zwei im wesentlichen diametral angeordnete Planetenräder (2) enthält, die zum Teil auf dem Außenring (4) und zum Teil auf der Sonnenradwelle (1) rollen, wobei die Planetenräder (2) mit einer Welle (3) versehen sind, die auf einer stationären Frontplatte (14) bzw. auf einer Trägerplatte angebracht ist, **dadurch gekennzeichnet, dass** die Sonnenradwelle (1) in Hochgeschwindigkeitslagern (6) gelagert ist, von denen das äußerste Lager in einer elastischen Buchse (7) in der Frontplatte (14) gelagert ist und das innerste Lager (6) in einer elastischen Buchse (7) in der Trägerplatte (12) gelagert ist.

2. Planetengetriebe nach Anspruch 1, **dadurch gekennzeichnet, dass** die Lager (5) der Planetenwellen (3) ein vorgegebenes radiales Spiel in ihren Bohrungen in der Frontplatte (14) bzw. der Trägerplatte (12) haben.

3. Planetengetriebe nach Anspruch 1 und 2, **dadurch gekennzeichnet, dass** zwei weitere Planetenräder (13) parallel zu den Planetenrädern (2) angebracht sind, wobei sich die weiteren Planetenräder (13) im wesentlichen diametral entgegengesetzt erstrecken, so dass die vier Planetenräder (2, 13) in die Sonnenradwelle (1) und den Außenring (4) mit einer wechselseitigen Winkelstellung von 90° eingreifen.

## Revendications

1. Engrenage planétaire incorporé dans un carter d'engrenage avec une bague externe (4) et avec des roues planétaires (2) et un arbre de planétaire (1) en particulier pour être utilisé à un nombre élevé de tours et à des rapports de vitesse élevés, dans lequel l'engrenage comprend deux roues planétaires (2) positionnées essentiellement de manière diamétrale qui roulent partiellement contre la bague externe (4) et partiellement contre l'arbre de planétaire (1), lesdites roues planétaires (2) étant prévues avec un arbre (3) qui est monté (5) sur une plaque avant fixe (14) et sur une plaque de support (12) respectivement, **caractérisé en ce que** l'arbre de planétaire (1) est monté dans des paliers (6) à grande vitesse dont le palier (6) situé le plus à l'extérieur est monté dans une douille élastique (7) dans la plaque avant (14) et le palier (6) situé le plus à l'intérieur est monté dans une douille élastique (7) dans la plaque de support (12).

2. Engrenage planétaire selon la revendication 1, **caractérisé en ce que** les paliers (5) des arbres planétaires (3) ont un jeu radial prédéterminé dans leurs alésages situés dans la plaque avant (14) et la plaque de support (12) respectivement.

3. Engrenage planétaire selon les revendications 1 et 2, **caractérisé en ce que** l'on monte deux autres roues planétaires (13) s'étendant parallèlement aux roues planétaires (2), les deux roues planétaires supplémentaires (13) s'étendant essentiellement de manière diamétralement opposée de sorte que les quatre roues planétaires (2, 13) mettent en prise l'arbre de planétaire (1) et la bague externe (4) avec une position angulaire mutuelle de 90°.
